# EUROPEAN PATENT APPLICATION

(11) **EP 4 593 166 A1**
(43) Date of publication of application: **30.07.2025**
(21) Application number: 24217635.2
(22) Date of filing: 05.12.2024
(51) Int. Cl.: H01M 50/107, H01M 50/552, H01M 50/559, H01M 50/566

(54) **CYLINDRICAL SECONDARY BATTERY**

(30) Priority: 29.01.2024 KR 20240013086
(71) Applicant: SAMSUNG SDI CO., LTD., Yongin-si, Gyeonggi-do 17084 (KR)
(72) Inventor: Jung, Hyun Ki, 17084 Yongin-si, Gyeonggi-do (KR); Ko, Sung Gwi, 17084 Yongin-si, Gyeonggi-do (KR); Jun, Woo Tae, 17084 Yongin-si, Gyeonggi-do (KR); Cha, Jae Hyuck, 17084 Yongin-si, Gyeonggi-do (KR); Park, Gun Gue, 17084 Yongin-si, Gyeonggi-do (KR); Kim, Myung Seob, 17084 Yongin-si, Gyeonggi-do (KR); Lee, Ho Jae, 17084 Yongin-si, Gyeonggi-do (KR)
(74) Representative: Gulde & Partner

(57) **Abstract**

A cylindrical secondary battery includes an electrode assembly including a first electrode plate, a separator, and a second electrode plate; a case accommodating the electrode assembly and having a lower end that is open and electrically coupled to the second electrode plate; a first current collector plate between a top surface of the electrode assembly and the case and that is electrically connected to the first electrode plate; a terminal passing through a top surface of the case and including a lower end electrically and mechanically coupled to a top surface of the first current collector plate; and a cap plate configured to seal the lower end of the case. The terminal includes a lower terminal including a welding groove having a depth from a top surface of the terminal in a downward direction; and an upper terminal in the welding groove of the lower terminal.

## Description

### Background

### 1. Field

Embodiments relate to a cylindrical secondary battery.

### 2. Description of the Related Art

In general, a cylindrical secondary battery includes a cylindrical electrode assembly, a cylindrical can accommodating the electrode assembly and an electrolyte, and a cap assembly coupled to an opening of a side of the can to seal the can and electrically connected to the electrode assembly to electrically connect an external device or component to the electrode assembly.

A battery module may include a plurality of cylindrical secondary batteries connected to each other by busbars. However, because busbars have to be connected to upper and lower portions of the secondary batteries, respectively, there is a limitation in that a structure is complicated, and a manufacturing process time increases.

To address this limitation, a can may be provided with a terminal hole at upper and lower ends, and a positive electrode rivet terminal and the can are insulated from each other inside the terminal hole. Accordingly, the busbar is provided on the same surface of the secondary battery to facilitate the connection of the busbar in the battery module.

To prevent foreign substances from being generated inside the electrode assembly, welding may be performed between the rivet terminal and the current collector plate of the electrode assembly through a groove provided outside the rivet terminal. However, if an error occurs in alignment during the welding with the busbar due to the groove on the outside of the rivet terminal, an insufficient welding area or welding defects may occur.

The above-described information disclosed in the technology that serves as the background of the present disclosure is only for improving understanding of the background of the present disclosure and thus may include information that does not constitute the related art.

### Summary

Aspects of some embodiments of the present disclosure provide a cylindrical secondary battery in which a terminal and a current collector plate are welded outside of the case through a welding groove provided in a lower terminal to prevent welding impurities from being generated inside the case and/or to prevent an electrode assembly from being damaged by welding heat.

Other aspects of some embodiments of the present disclosure provide a cylindrical secondary battery in which a welding groove provided in a lower terminal is filled by an upper terminal so that a top surface of a terminal has an approximately flat top surface, and thus, if a plurality of secondary batteries are welded through a busbar, welding defects due to misalignment, which may occur due to the welding groove, or an increase in resistance due to an insufficient welding area, are prevented from occurring.

According to some embodiments, a cylindrical secondary battery includes: an electrode assembly comprising a first electrode plate, a separator, and a second electrode plate; a case accommodating the electrode assembly and of which a lower end is open to be electrical connected to the second electrode plate; a first current collector plate between a top surface of the electrode assembly and the case and electrically connected to the first electrode plate; a terminal passing through a terminal hole in a top surface of the case and of which a lower end is electrically and mechanically coupled to a top surface of the first current collector plate; and a cap plate configured to seal a lower end of the case. The terminal includes: a lower terminal provided with a welding groove having a depth from a top surface of the terminal in a downward direction; and an upper terminal extending into the welding groove of the lower terminal.

According to some embodiments, a cylindrical secondary battery includes: an electrode assembly comprising a first electrode plate, a separator, and a second electrode plate; a case accommodating the electrode assembly, the case comprising a lower end that is open and electrically coupled to the second electrode plate; a first current collector plate between a top surface of the electrode assembly and the case, the first current collector plate being electrically connected to the first electrode plate; a terminal passing through terminal hole in a top surface of the case, the terminal comprising a lower end electrically and mechanically coupled to a top surface of the first current collector plate; and a cap plate configured to seal the lower end of the case, wherein the terminal comprises: a lower terminal comprising a welding groove having a depth from a top surface of the terminal in a downward direction; and an upper terminal in the welding groove of the lower terminal.

The lower terminal may include: a head disposed on an upper portion of a top surface part of the case; and a coupling part extending from a central portion of the head to the inside of the case and integral with the head.

The first current collector plate may be welded outside the terminal through the welding groove such that the top surface of the first current collector plate is in contact with a bottom surface of the lower terminal so that a welding bead is in the welding groove.

The welding groove may pass through the central portion of the head and be provided downward from an upper portion of the coupling part.

A planar size of the head may be greater than a planar size of the coupling part.

A planar size of a lower portion of the coupling part may be greater than an area of the coupling part in the terminal hole of the case. A planar size of a lower portion of the coupling part may be greater than an area of the terminal hole of the case.

The lower terminal may include: a head on a lower portion of a top surface part of the case; and a coupling part extending from a central portion of the head to the outside of the case and integral with the head.

The welding groove may be defined downward from a central portion of a top surface of the coupling part.

The cylindrical secondary battery may further include a coupling member on an upper portion or a top surface part of the case and coupled to the coupling part.

The cylindrical secondary battery may further include a coupling member on an upper portion a top surface of the case and coupled to the coupling part.

The coupling member may include a coupling hole passing through a center thereof, and the coupling part of the lower terminal may include a deformable part of which an upper side passes through the coupling hole and is coupled to the coupling member through a rivet.

The coupling member may further include a protrusion protruding from a lower area of the coupling hole, and a stepped portion may be provided in the coupling hole.

The deformable part of the lower terminal may be above the protrusion in the coupling part.

The upper terminal may include: a main body extending into the welding groove; and a flange extending from an upper portion of the main body to cover a top surface of the lower terminal.

The upper terminal may include: a main body in the welding groove; and a flange extending from an upper portion of the main body and covering a top surface of the lower terminal.

A bottom surface of the main body may be spaced apart from a bottom surface of the welding groove.

A thickness of an edge area of the flange may be less than that of each of other areas of the upper terminal.

The edge area of the flange may have a stepped portion or an inclined surface.

The main body may have an outer diameter less than an inner diameter of the welding groove.

The cylindrical secondary battery may further include an anisotropic conductive material between a bottom surface of the flange and a top surface of the lower terminal.

A top surface of the upper terminal may protrude further upward than a top surface of the lower terminal.

A lower area of the upper terminal in the welding groove may have an outer diameter that is greater than an outer diameter of an upper area of the upper terminal protruding to the outside of the welding groove.

The upper terminal may further include a flange extending along a top surface of the lower terminal.

The flange may have a stepped portion or an inclined surface.

A top surface of the upper terminal may be below a top surface of the lower terminal.

The upper terminal may include an escape groove extending upward from a bottom surface thereof.

The upper terminal may be welded to the lower terminal.

The top surface of the terminal may have a diameter of about (approximately) 11 mm or more, and the diameter may be less than that of a top surface of the case.

The top surface of the upper terminal may have a diameter of about (approximately) 11 mm or more, and the diameter of the top surface of the terminal may be less than a diameter of a top surface part of the case.

The welding groove may have an upper inner diameter greater than a lower inner diameter thereof.

The cylindrical secondary battery may further include a first gasket between the terminal and the case.

The case may include: a beading part recessed into the case above the cap plate; and a crimping part, in which a lower end of the case is bent inward to fix the cap plate, at a lower portion of the case.

The cylindrical secondary battery may further include a second gasket between the cap plate and the beading part and between the cap plate and the crimping part, and the cap plate may be non-polar.

### Brief Description of the Drawings

The accompanying drawings are included to provide a further understanding of the present disclosure, and are incorporated in and constitute a part of this specification. The drawings illustrate exemplary embodiments of the present disclosure and, together with the description, serve to explain principles of the present disclosure. In the drawings:
FIG. 1 illustrates a perspective view of a cylindrical secondary battery according to embodiments of the present disclosure;
FIG. 2 illustrates a cross-sectional view of the cylindrical secondary battery of FIG. 1;
FIG. 3 illustrates an enlarged cross-sectional view of a portion A of FIG. 2;
FIGS. 4A and 4B illustrate an enlarged cross-sectional view of another embodiment of a portion A of FIG. 2;
FIG. 5 illustrates a cross-sectional view of a cylindrical secondary battery according to embodiments of the present disclosure;
FIG. 6 illustrates an enlarged cross-sectional view of a portion B of FIG. 5;
FIG. 7 illustrates a cross-sectional view of a cylindrical secondary battery according to embodiments of the present disclosure;
FIG. 8 illustrates an enlarged cross-sectional view of a portion C of FIG. 7;
FIG. 9 illustrates a cross-sectional view of a cylindrical secondary battery according to embodiments of the present disclosure;
FIG. 10 is an enlarged cross-sectional view of a terminal portion of FIG. 9; and
FIGS. 11A and 11B are enlarged cross-sectional views of another embodiment of the terminal portion of FIG. 9.

### Detailed Description

Hereinafter, embodiments will be described in detail with reference to the accompanying drawings.

Embodiments of the present disclosure may, however, be embodied in many different forms and should not be construed as being limited to the embodiments set forth herein; rather, these embodiments are provided so that those skilled in the art thoroughly understand the present disclosure.

In addition, in the following drawings, the thickness or size of each layer is exaggerated for convenience and clarity of description, and the same reference numerals in the drawings refer to the same elements. As used herein, the term "and/or" includes any and all combinations of one or more of the associated listed items. In this specification, it will also be understood that if a member A is referred to as being connected to a member B, the member A may be directly connected to the member B or indirectly connected to the member B with a member B therebetween.

The terms used in this specification are for illustrative purposes of the present disclosure only and should not be construed to limit the meaning or the scope of the present disclosure. As used in this specification, a singular form may, unless definitely indicating a particular case in terms of the context, include a plural form. Also, the expressions "comprise" and/or "comprising" used in this specification neither define the mentioned shapes, numbers, processes, operations, members, elements, and/or groups of these, nor exclude the presence or addition of one or more other different shapes, numbers, processes, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, region, layer, or portion from another member, component, region, layer, or portion. Thus, a first member, component, region, layer, or portion which will be described may also refer to a second member, component, region, layer, or portion, without departing from the teaching of the present disclosure.

Spatially relative terms, such as "below", "beneath", "lower", "above", "upper" and the like, used herein for ease of description to describe one element or feature's relationship to another element(s) or feature(s) as illustrated in the figures. These spatially relative terms are intended for easy comprehension of the prevent invention according to various process states or usage states of the prevent invention, and thus, the present disclosure is not limited thereto. For example, an element or feature shown in the drawings is turned inside out, the element or feature described as "beneath" or "below" may change into "above" or "upper". Thus, the term "below" may encompass the term "above" or "below".

Preferred embodiments of the present disclosure will be described in detail with reference to the accompanying drawings so that those skilled in the art may easily implement the present disclosure.

Here, throughout the specification, parts having similar configurations and operations are denoted by the same reference numerals. Also, in this specification below, if any portion is referred to as being "electrically connected" to another portion, it should be understood that the former may be "directly connected" to the latter, or "connected" to the latter via an intervening member.

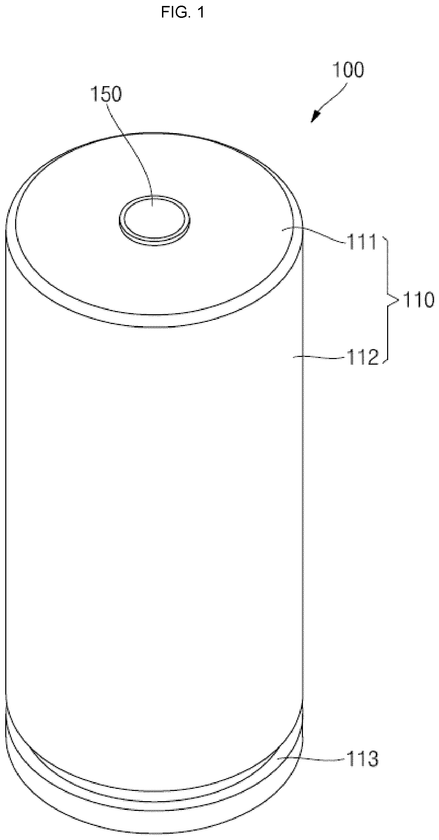

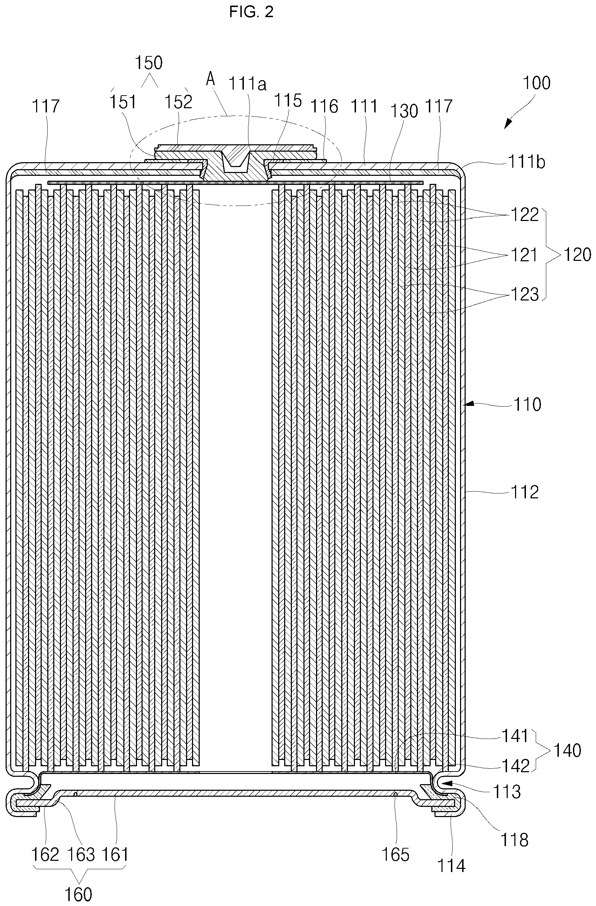

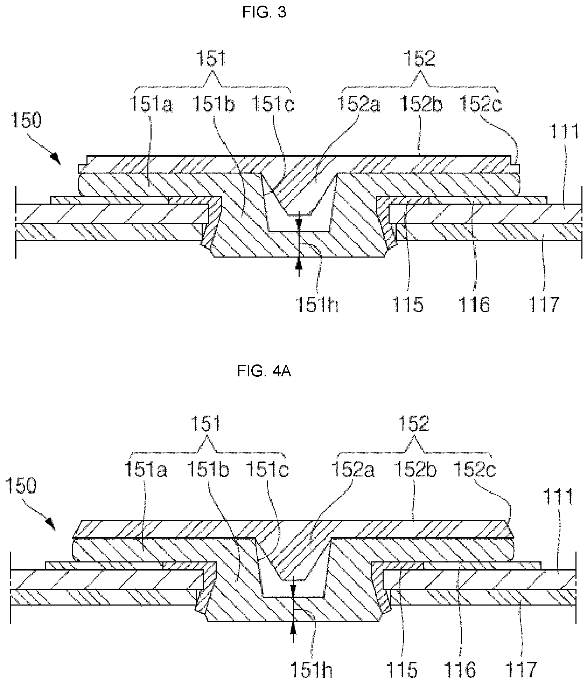

FIG. 1 illustrates a perspective view of a cylindrical secondary battery 100 according to embodiments, and FIG. 2 illustrates a cross-sectional view of the cylindrical secondary battery 100 of FIG. 1. FIG. 3 illustrates an enlarged cross-sectional view of a portion A of FIG. 2. Hereinafter, a cylindrical secondary battery 100 will be described with reference to FIGS. 1 to 3.

As illustrated in FIGS. 1 and 2, a secondary battery 100 according to embodiments may include a case 110, an electrode assembly accommodated in the case 110, a terminal 150 coupled to a terminal hole provided in a first end (throughout the present disclosure for the sake of simplicity and with regard to the figures also referred to as the "upper end") of the case 110, and a cap plate 160 that seals an opening of the other end (i. e., a second end, throughout the present disclosure also referred to as the "lower end") of the case 110.

Throughout the present disclosure, some members or parts of the cylindrical secondary battery are termed or labelled by expressions comprising a relative term, e. g., the expressions "lower terminal," "upper terminal," "bottom surface" (of a certain member), or "top surface" (of a certain member), etc. Such expressions have been chosen to facilitate the intelligibility of the disclosure. Instead of "lower terminal" and "upper terminal," expressions like "first terminal" and "second terminal," respectively, could be used alternatively. However, it is noted that, in accordance with the figures, expressions like "upper" and "lower" may indicate the spatial arrangement with regard to a direction parallel to the center axis of the cylindrical secondary battery and pointing from the second end of the case to the first end of the case, irrespectively of the special embodiment of the cylindrical secondary battery. Then, when viewing into this direction, the "lower terminal" is arranged in front of the "upper terminal," a "bottom surface" (of a certain member) is arranged in front of the "top surface" (of this member), etc.

The case 110 may include a circular top surface 111, and a side surface 112 extending a predetermined length upward from an edge (e.g., a periphery) of the top surface part 111. The top surface 111 and the side surface 112 of the case 110 may be integral with each other. In one or more embodiments, a bent part 111b bent in a round shape (e.g., a rounded corner) may be provided between the top surface part 111 and the side surface part 112.

The circular top surface 111 may have a flat circular plate shape and may include a terminal hole 111a passing through a central (or approximately central) portion thereof. The terminal 150 may be inserted into the terminal hole 111a. A first gasket 115 for sealing and electrical insulation may be between the terminal hole 111a and the terminal 150. The first gasket 115 may block contact between the terminal 150 and the case 110 to electrically separate or isolate the terminal 150 and the case 110 from each other. The first gasket 115 may seal the terminal hole 111a of the top surface 111 of the case 110. The first gasket 115 may be made of a resin material such as polyethylene (PE), polypropylene (PP), polyethylene terephthalate (PET), or the like.

In one or more embodiments, the case 110 may further include an inner insulating member 117 provided to cover an inner surface of the top surface part 111. In one or more embodiments, the inner insulating member 117 may be attached to the inner surface of the top surface part 111 by coating or adhesion. In one or more embodiments, the inner surface of the top surface part 111 may be a surface facing a top surface of the electrode assembly 120 and may be a bottom surface of the top surface part 111. The inner insulating member 117 may prevent the top surface part 111 of the case 110 and the first electrode plate 121 of the electrode assembly 120 from contacting each other. In one or more embodiments, the inner insulating member 117 may extend to an inner surface of the bent part 111b. The inner insulating member 117 may be provided to cover the inner surfaces of the top surface part 111 and the bent part 111b or may be provided to cover only the inner surface of the top surface part 111.

In the cylindrical secondary battery 100, a lower portion of the case 110 may be opened during a manufacturing process. In some embodiments, during the process of manufacturing the cylindrical secondary battery 100, the electrode assembly 120 may be inserted together with an electrolyte through an open lower portion of the case 110. In one or more embodiments, the electrolyte and the electrode assembly 120 may be inserted into the case 110 in a state or configuration in which the open lower portion is oriented facing upward. After the electrolyte and the electrode assembly 120 are inserted into the case 110, the cap plate 160 may be coupled to the open lower end to seal the inside of the case 110. The electrolyte serves to enable movement of lithium ions between a positive electrode plate 121 and a negative electrode plate 122 of the electrode assembly 120. The electrolyte may be a non-aqueous organic electrolyte that is a mixture of lithium salt and a high-purity organic solvent. In one or more embodiments, the electrolyte may be a polymer including a polymer electrolyte or a solid electrolyte, but the present disclosure is not limited to a particular type of electrolyte.

The case 110 may be made of steel, a steel alloy, aluminum, an aluminum alloy, or an equivalent thereof, but the material thereof is not limited thereto. In one or more embodiments, in the case 110, a beading part 113 recessed inward may be provided in the case 110 above the cap plate 160 to prevent the cap assembly 120 from being separated from the case 110, and a crimping part 114 bent inward may be provided at a lower portion of the case 110 below the cap assembly 120.

In the case 110, after the electrode assembly 120 is inserted through the open lower end, the beading part 113 may be provided to prevent the electrode assembly 120 from being separated from the case 110.

The electrode assembly 120 may include the first electrode plate 121, the second electrode plate 122, and a separator 123. The first electrode plate 121 may be a positive electrode plate, and the second electrode plate 122 may be a negative electrode plate, and vice versa. Hereinafter, for convenience of description, the first electrode plate 121 will be referred to as the positive electrode plate, and the second electrode plate 122 will be referred to as the negative electrode plate.

In the first electrode plate 121, at least one surface of plate-shaped metal foil made of aluminum (Al) is coated with a positive electrode active material made of transition metal oxide. In one or more embodiments, the first electrode plate 121 may have a positive electrode non-coating portion, which is not coated with the positive electrode active material, on an upper end thereof. The positive electrode non-coating portion may protrude toward an upper side of the electrode assembly 120. In one or more embodiments, the positive electrode non-coating portion of the first electrode plate 121 may protrude further upward than the second electrode plate 122 and the separator 123.

The second electrode plate 122 may be coated with a negative electrode active material such as graphite or carbon on at least one surface of a plate-shaped metal foil made of copper (Cu) or nickel (Ni). In one or more embodiments, the second electrode plate 122 may have a negative electrode non-coating portion, which is not coated with the negative electrode active material, on a lower end thereof. The negative electrode non-coating portion may protrude toward a lower side of the electrode assembly 120. In one or more embodiments, the negative electrode non-coating portion of the second electrode plate 122 may protrude further upward than the first electrode plate 121 and the separator 123.

The separator 123 may be made of polyethylene (PE) or polypropylene (PP), but the embodiments of the present disclosure are not limited thereto. The separator 123 may be between the first electrode 121 and the second electrode 122 to prevent a short circuit and allow the movement of lithium ions.

The electrode assembly 120 may be wound from a winding front end in a substantially cylindrical shape after the first electrode plate 121, the second electrode plate 122, and the separator 123 are stacked on each other. In one or more embodiments, in the electrode assembly 120, the positive electrode non-coating portion that is not coated with the positive electrode active material may protrude upward from the first electrode plate 121, and the negative electrode non-coating portion that is not coated with the negative electrode active material may protrude downward from the second electrode plate 122. In one or more embodiments, the electrode assembly 120 may be configured such that the outermost positive electrode non-coating portion may not protrude upward, and the outermost negative electrode non-coating portion may not protrude downward. In one or more embodiments, the electrode assembly 120 may have a stepped portion of which the outermost side of each of the upper and lower portions is recessed further than other areas. In the electrode assembly 120, if the inner insulating member 117 is not provided on the bent part 111b of the case 110, the electrode assembly 120 and the case 110 may be prevented from being in contact with each other.

A first current collector plate 130 may be a circular metal plate having a shape corresponding to a top surface of the electrode assembly 120. A planar size of the first current collector plate 130 may be equal to or less than a size of the top surface of the electrode assembly 120. The first current collector plate 130 may be made of aluminum (Al). The first current collector plate 130 may be fixed (e.g., welded) and electrically connected to the first electrode plate 121 exposed to the upper side of the electrode assembly 120 such that a bottom surface of the first current collector plate 161 is in contact with the top surface of the electrode assembly 120. The first current collector plate 130 may be fixed (e.g., welded) and electrically connected to the terminal 150 such that a top surface of the first current collector plate 130 is in contact with the bottom surface of the terminal 150. The first current collector plate 130 may serve as a path for a current flow between the first electrode plate 121 of the electrode assembly 120 and the terminal 150. The first current collector plate 130 may be welded to the electrode assembly 120 and accommodated in the case 110 and then welded to the terminal 150. The first current collector plate 130 may have a thickness less than a lower thickness 151h of the lower terminal 151 of the terminal 150 to improve weldability, as described in more detail below.

The second current collector plate 140 may include a circular planar part 141 corresponding to the bottom surface of the electrode assembly 120 and an extension part 142 extending downward from an edge of the planar part 141. A top surface of the planar part 141 may be in contact with the bottom surface of the electrode assembly 120. The top surface of the planar part 141 may be fixed (e.g., welded) and electrically connected to the second electrode plate 122 exposed to the lower side of the electrode assembly 120 such that the top surface of the planar part 141 is in contact with the bottom surface of the electrode assembly 120.

The extension part 142 may extend downward from the edge of the planar part 141. In one or more embodiments, the second current collector plate 140 may include a plurality of extension parts 142 spaced apart from each other along the edge of the planar part 141. In one or more embodiments, four extension parts 142 may be provided to be symmetrical to each other about the planar part 141, but the embodiments of the present disclosure are not limited thereto. The extension part 142 may be bent to extended downward from the edge of the planar part 141. In one or more embodiments, the extension portion 142 may be in contact with an inner surface of the beading part 113. In one or more embodiments, the extension portion 142 may be rounded or bent (e.g., curved) along the beading part 113. In one or more embodiments, the inner surface may be an inner surface of the case 110. An end of the extension part 142 may be between the beading part 113 and a second gasket 118. The extension part 142 may be in contact with and be coupled to the beading part 113 of the case 110. In one or more embodiments, the extension part 142 may be coupled to by welding, and contact with, an inner surface of the beading part 113 of the case 110. The second current collector plate 140 may serve as a path for a current flow between the second electrode plate 122 of the electrode assembly 120 and the case 110. In one or more embodiments, the case 110 may be a negative electrode terminal. In one or more embodiments, the second current collector plate 140 may include a hole passing between the top and bottom surfaces at a center (or approximately a center) of the planar part 141, and the electrolyte may be injected into the electrode assembly 120 through the hole.

The terminal 150 may be inserted into a terminal hole 111a in the top surface portion 111 of the case 110 and be in contact with and electrically connected to the first electrode collector plate 130. The terminal 150 may be electrically connected to the first electrode plate 121 of the electrode assembly 120 through the first current collector plate 130. In one or more embodiments, the terminal 150 may be a positive electrode terminal. The terminal 150 and the case 110 may have different polarities. In one or more embodiments, the terminal 150 may be made of the same or similar material as each of the first current collector plate 130 and the first electrode plate 121.

The terminal 150 may include a lower terminal 151 and an upper terminal 152. The lower terminal 151 may include a head 151a exposed to an upper side of the case 110 and a coupling part 151b extending (e.g., downward) from a central portion of the head 151a to the inside of the case 110. A planar size of the head 151a may be greater than that of the coupling part 151b. In the lower terminal 151, an upper end of the coupling part 151b may be connected to a bottom surface of the head 151a, and the head 151a and the coupling part 151b may be integral or monolithic with each other. An outer side of the lower terminal 151 may be coupled inside the terminal hole 111a of the case 110. In one or more embodiments, the first gasket 115 may be between the lower terminal 151 and the case 110. A lower portion of the coupling part 151b may be compressed and deformed (compression molded) by riveting, which seals the terminal hole 111a. In one or more embodiments, the coupling part 151b may have a diameter that gradually increases from the terminal hole 111a toward the inside of the case 110. The coupling part 151b may have a greater diameter on an area inside the case 110 than on an area inside the terminal hole 111a of the case 110. In one or more embodiments, a diameter of a bottom surface of the coupling part 151b may be greater than a diameter of each of the other areas of the coupling part 151b. In one or more embodiments, a lower side of the coupling part 151b may overlap the case 110 along a plane.

In one or more embodiments, an outer insulating member 116 may be between the head 151a and the top surface 111 of the case 110. The head 151a may be on the top surface 111, and the outer insulating member 116 that blocks electrical contact may be on an area on which the head 151a and the top surface 111 overlap each other in the plane. In one or more embodiments, the outer insulating member 116 may be between the head 151a and the top surface 111 of the case 110 such that the outer insulating member 116 does not overlap the first gasket 115 on the plane.

The first gasket 115 may be between the coupling part 151b and the terminal hole 111a of the case 110, and an upper end of the first gasket 115 may extend between the head 151a and the top surface part 111 of the case 110. In one or more embodiments, an end of the upper end of the first gasket 115 may be in contact with the outer insulating member 116. In one or more embodiments, the first gasket 115 and the outer insulating member 116 may be between the lower terminal 151 and the case 110 to electrically insulate and seal the lower terminal 151 and the case 110. In one or more embodiments, the first gasket 115 and the outer insulating member 116 may be integral. The first gasket 115 may be in contact with the top and bottom surfaces of the top portion 111 of the case 110. A lower end of the first gasket 115 may be in contact with an inner insulating member 117.

The lower terminal 151 may include a welding groove 151c having a depth in a direction from the top surface of the head 151a to the coupling part 151b. The welding groove 151c may pass through the central portion of the head 151a in a downward direction from an upper side of the coupling part 151b. An inner diameter of the welding groove 151c at a lower side may be less than or equal to that at an upper side of the welding groove 151c.

In one or more embodiments, a lower inner diameter of the welding groove 151c may be less than a diameter of the terminal hole 111a. The lower inner diameter of the welding groove 151c may be about (approximately) 0.5 mm to about (approximately) 2 mm. In one or more embodiments, if the lower inner diameter of the welding groove 153 were less than about (approximately) 0.5 mm, the welding with the first current collector plate 130 may not be easy due to an insufficient welding area. In one or more embodiments, if the lower inner diameter of the welding groove 151c is greater than about (approximately) 2 mm, the riveting may not be easy due to an increase in size and decrease in rigidity of the lower terminal 151. In one or more embodiments, an upper inner diameter of the welding groove 151c may be about (approximately) 2 mm to about (approximately) 5 mm. If the upper inner diameter of the welding groove 151c is less than about (approximately) 2 mm, it may not be easy to secure the welding area and damage to the head 151a may occur if welding the area outside of the welding groove 151c. In one or more embodiments, if the upper inner diameter of the welding groove 151c is greater than about (approximately) 5 mm, the riveting may not be easy due to an increase in size and a decrease in rigidity of the terminal 150.

A height of the welding groove 151c may be less than an overall height of the lower terminal 151. The lower terminal 151 is provided with the welding groove 151c, and thus a lower thickness 151h of the coupling part 151b of the lower terminal 151 may be reduced. The lower thickness 151h of the coupling part 151b may be a thickness from the bottom surface of the welding groove 151c to the bottom surface of the coupling part 151b. The lower thickness 151h of the coupling part 151b may be reduced by the welding groove 151c, and thus the lower terminal 151 and the first current collector plate 130 may be welded to each other outside the case 110.

The lower thickness 151h of the coupling part 151b may be about (approximately) 0.5 mm to about (approximately) 1.5 mm. In one or more embodiments, if the lower thickness 151h of the coupling part 151b is less than about (approximately) 0.5 mm, it may be difficult to maintain the rigidity of the case 110. In one or more embodiments, if the lower thickness 151h of the coupling part 151b is greater than about (approximately) 1.5 mm, the welding between the lower terminal 151 and the first current collector plate 130 outside the case 110 may not be easy.

In one or more embodiments, the upper inner diameter of the welding groove 151c may be greater than the lower inner diameter of the welding groove 151c. In addition, the lower terminal 151 may include the welding groove 151c, and thus even if welded to the first current collector plate 130 outside the lower terminal 151, the welding bead may be provided inside the welding groove 151c to prevent the bead from protruding from the lower terminal 151. In one or more embodiments, the lower terminal 151 may be coupled to the first current collector plate 130 by welding in a configuration in which the flat bottom surface of the lower terminal 151 is in contact with the top surface of the first current collector plate 130.

In one or more embodiments, the lower terminal 151 may be provided with the welding groove 151c to allow the welding with the first current collector plate 130 outside the case 110, thereby preventing welding foreign substances from being generated inside the case 110 and preventing the electrode assembly 120 from being damaged by welding heat.

The upper terminal 152 may include a main body 152a inserted into the welding groove 151c provided in the head 151a of the lower terminal 151 and a flange 152b extending from an upper portion of the main body 152a along the top surface of the lower terminal 151. The upper terminal 152 may have a plate shape having a flat top surface. The upper terminal 152 may have a diameter of about (approximately) 11 mm or more, and be smaller than the top portion 111 of the case 110. In the upper terminal 152, a plurality of the cylindrical secondary batteries may be connected to each other through a busbar, and the welding may be performed even if a deviation in alignment of the terminals of each cylindrical secondary battery occurs.

The top surface of the upper terminal 152 may be equal to or smaller than the head 151a of the lower terminal 151. The top surface of the upper terminal 152 may be the top surface of the terminal 150.

The flange 152b may have a substantially flat plate shape. The upper terminal 152 may include the flange having a flat plate shape and the main body 152a protruding downward from an approximately center of the flange 152b. A bottom surface of the flange 152b may be in contact with a top surface of the head 151a of the lower terminal 151. In one or more embodiments, the main body 152a may extend into the welding groove 151c in the head 151a. The main body 152a may facilitate positional adjustment or alignment when the upper terminal 152 is coupled to the lower terminal 151. In one or more embodiments, an outer diameter of the main body 152a may be less than the inner diameter of the welding groove 151c. In one or more embodiments, the main body 152a may have a lower outer diameter that is less than an upper outer diameter of the main body 152a, and thus the insertion into the welding groove 151c may be easier.

In one or more embodiments, a bottom surface of the main body 152a may be spaced apart from the bottom surface of the welding groove 151c. Accordingly, because the main body 152a is spaced apart from the bottom surface of the welding groove 153, contact defects between the bottom surface of the flange 152b of the upper terminal 152 and the top surface of the head 151a of the lower terminal 151 due to the welding bead generated inside the welding groove 151c of the lower terminal 151 may be prevented (or at least mitigated) from occurring. The bottom surface of the flange 152b of the upper terminal 152 and the top surface of the head 151a of the lower terminal 151 may be coupled and electrically connected by a welding bead while being in contact with each other.

In one or more embodiments, the upper terminal 152 may include an edge area 152c that is the outermost side (e.g., a peripheral or circumferential edge) of the flange 152b on the plane. In one or more embodiments, the edge area 152c may be thinner than each of other areas of the flange 152b. In one or more embodiments, when compared to top surfaces of other areas of the flange 152b, a top surface of the edge area 152c may be lower. In one or more embodiments, the top surface of the edge area 152c may have a height difference with respect to each of the top surfaces of other areas of the flange 152b. The edge area 152c of the upper terminal 152 may be coupled and electrically connected to the head 151a of the lower terminal 151 by welding at upper and side portions thereof. In one or more embodiments, the edge area 152c may include a welding part on all or a portion of the area. In one or more embodiments, the edge area 152c may include a welding part having a circular shape or at least one arc shape on the plane. In one or more embodiments, a thickness of the edge area 152c may be about (approximately) 0.5 mm to about (approximately) 1.5 mm. In one or more embodiments, the outermost side of the edge area 152c may be on the same plane as the outermost side of the head 151a of the lower terminal 151 or the edge area 152c may be inside the head 151a.

In one or more embodiments, the edge area 152c may be inclined as illustrated in FIG. 4A. In one or more embodiments, the edge area 152c may have an inclined surface and a bottom surface. In one or more embodiments, the edge area 152c may have an inclined surface in which an angle that is in contact with the top surface of the flange 152b in a cross-section is an obtuse angle, and an angle that is in contact with the bottom surface of the flange 152b is an acute angle.

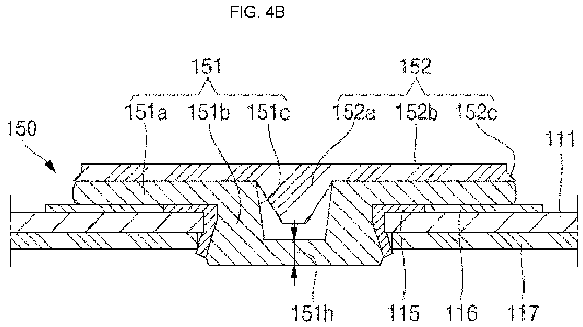

In one or more embodiments, the edge area 152c may have both a stepped portion and an inclined surface as illustrated in FIG. 4B. In one or more embodiments, the edge area 152c may be thinner than each of other areas of the flange 152b. The edge area 152c may have an inclined surface and a bottom surface. The uppermost end of the inclined surface of the edge area 152c may be below the top surface of each of other areas of the flange 152b.

In one or more embodiments, the edge area 152c may be below the top surface of the upper terminal 152 or may have the inclined surface to prevent the welding bead generated due to the welding between the lower terminal 151 and the upper terminal 152 from protruding upward above the top surface of the upper terminal 152. The upper terminal 152 may have a flat top surface. In one or more embodiments, a plurality of the cylindrical secondary batteries 100 may be electrically connected to each other through a busbar, and welding defects in which the busbar above the welding groove 151c is not welded to the terminal 150 due to positional deviation(s) between the terminals 150 of the plurality of cylindrical secondary batteries 100 may be prevented from occurring.

In addition, an anisotropic conductive material (e.g., an anisotropic conductive paste (ACP) or anisotropic conductive paste or (ACF)) may be between the bottom surface of the flange 152b of the upper terminal 152 and the top surface of the head 151 of the lower terminal 151. The upper terminal 152 and the lower terminal 151 may be in contact with and coupled to each other by the anisotropic conductive material rather than by welding.

The cap plate 160 may be a circular metal plate and may be coupled to the lower end of the case 110. A bottom surface of the cap plate 160 may be exposed to the outside. The cap plate 160 may be coupled to the lower end of the case 110 in a state in which the second gasket 118 is between the cap plate 160 and the case 110 to prevent the cap plate 160 from being electrically connected to the case 110. Because the cap plate 160 is not electrically connected to the positive electrode or the negative electrode of the electrode assembly 120, there may be no separate electrical polarity.

The cap plate 160 may be fixed in a state in which an edge area of the cap plate 160 is between the beading part 113 and the crimping part 114 of the case 110. In one or more embodiments, the cap plate 160 may be seated on a lower portion of the second gasket 118 in a configuration in which the second gasket 118 is on a lower portion of the beading part 113 of the case 110. The crimping part 114 of the case 110 may be bent to the inside of the cap plate 160 to press the second gasket 118, thereby coupling the cap plate 160 to the case 110. The second gasket 118 may be made of a resin material such as polyethylene (PE), polypropylene (PP), polyethylene terephthalate (PET), or the like. The second gasket 118 may press the case 110 and the cap plate 160 to seal a gap between the case 110 and the cap plate 160, thereby preventing the cap plate 160 from being separated from the case 110. The second gasket 118 may have an upper portion between the beading part 113 and the cap plate 160 and a lower portion between the crimping portion 114 and the cap plate 160. A lower end of the second gasket 118 may protrude further toward the center of the cap plate 160 than the crimping portion 114.

The cap plate 160 may include a central area 161 on a lower portion of the second current collector 140, and an edge area 162 on the beading part 113 and crimping portion 114 of the case 110 and coupled to the case 110. In one or more embodiments, the central area 161 of the cap plate 160 may be concave toward the inside of the case 110 compared to the edge area 162. In one or more embodiments, the edge area 162 of the cap plate 160 may protrude further outward toward the case 110 than the central area 161. In one or more embodiments, the cap plate 160 may further include a connection area 163 connecting the central area 161 to the edge area 162. The connection area 163 may be an inclined stepped portion between the central area 161 and the edge area 162. In one or more embodiments, a bent part may be further provided between the connection area 163 and the central area 161 and between the connection area 163 and the edge area 162.

The cap plate 160 may include a vent 165 configured to be opened at a threshold pressure in the central area 161. The cap plate 160 may have a thinner thickness at the vent 165 than each of other areas of the cap plate 160. The vent 165 may be a notch extending upward from the bottom surface of the cap plate 160.

If an excessive internal pressure occurs inside the case 110 of the cylindrical secondary battery 100, the vent 165 may be broken to discharge the excessive internal pressure. The vent 165 of the cap plate 160 may be spaced apart from a center of the cap plate 160 and may have a ring shape on the plane of the cap plate 160. In one or more embodiments, the vent 165 may have at least one pattern having a straight or curved shape on the plane. A thickness of the cap plate 160 at the vent 165 may be less than that of each of other areas of the cap plate 160.

In the cylindrical secondary battery 100, the terminal 150 and the first current collector plate 130 may be welded outside the case 110 through the welding groove 151c provided in the lower terminal 151. In one or more embodiments, the cylindrical secondary battery 100 may prevent the welding impurities from occurring inside the case 110 and/or prevent the electrode assembly 120 from being damaged by the welding heat.

In one or more embodiments, the cylindrical secondary battery 100 may be electrically connected to another adjacent cylindrical secondary battery 100 through the busbar. In the cylindrical secondary battery 100, the busbar may be in contact with and coupled to the terminal 150 or the case 110. The cylindrical secondary battery 100 may have a flat (planar) shape due to the upper terminal 152 coupled to the upper side of the lower terminal 151 having the welding groove 151c, and thus the welding to the busbar may be easy, straightforward, and/or simple.

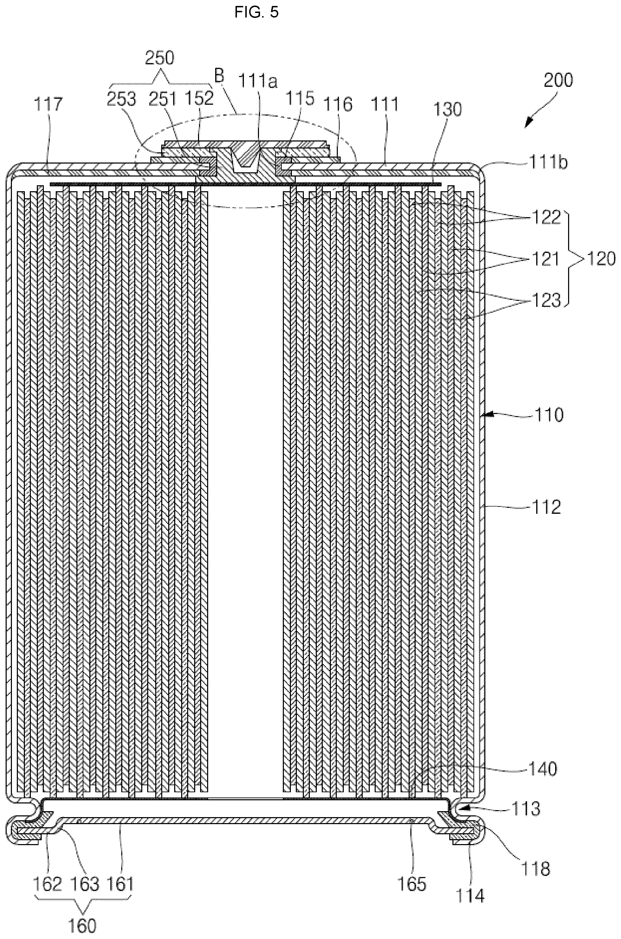

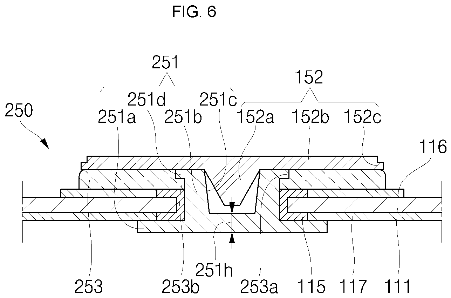

FIG. 5 illustrates a cross-sectional view of a cylindrical secondary battery according to embodiments of the present disclosure. FIG. 6 illustrates an enlarged cross-sectional view of a portion B of FIG. 5.

As illustrated in FIGS. 5 and 6, a secondary battery 200 according to embodiments of the present disclosure may include a case 110, an electrode assembly accommodated in the case 110, a terminal 250 coupled to a terminal hole provided in one end (e.g., the upper end) of the case 110, and a cap plate 160 that seals an opening of the other end (e.g., the lower end) of the case 110. In one or more embodiments, the cylindrical secondary battery 200 may include a first current collector plate 130, which electrically connects a first electrode plate 121 to a terminal 250 of an electrode assembly 120, and a second current collector plate 140, which connects the case 110 to a second electrode plate 122 of the electrode assembly 120.

The case 110, the electrode assembly 120, the first current collector plate 130, the second current collector plate 140, and the cap plate 160 of the cylindrical secondary battery 200 may be the same as those of the cylindrical secondary battery illustrated in FIGS. 1 to 3. In one or more embodiments, the terminal 250 of the cylindrical secondary battery 200 may have an upper terminal 152 that has the same structure as the terminal 150 of the cylindrical secondary battery 100 illustrated in FIGS. 1 to 3, but may have a lower terminal 251 and a coupling member 253, which are different from those of the cylindrical secondary battery 100.

As a result, descriptions of the cylindrical secondary battery 200 will focus on the structure of the lower terminal 251 and the coupling member 253, which are different from those of the cylindrical secondary battery 100.

The lower terminal 251 may include a head 251a inside the case 110 and a coupling part 251b extending from a center (or approximately a center) of the head 251a toward the outside of the case 110. A planar size of the head 251a may be greater than that of the coupling part 251b. In the lower terminal 251, a lower end of the coupling part 251b may be connected to a top surface of the head 251a, and the head 251a and the coupling part 251b may be integral with each other or monolithic. The lower terminal 251 may be coupled to a terminal hole 111a of the case 110 outward from the inside. In one or more embodiments, a first gasket 115 may be between the lower terminal 251 and the case 110. An upper end of the coupling part 251b of the lower terminal 251 may be inserted into a coupling hole 253a of the coupling member 253 and then compressively deformed (compression molded) by riveting to seal a terminal hole 110a of the case 110. The compressively deformed (molded) portion of the lower terminal 251, which is an end of the coupling part 251b, may be referred to as a deformable part 251d.

In one or more embodiments, the coupling member 253 may be outside the case 110. The coupling member 253 may have a flat plate shape and may be provided with the coupling hole 253a at approximately a center of the flat plate shape. A planar size of the coupling hole 253a of the coupling member 253 at an upper side of the coupling member 253 may be greater than that at a lower side of the coupling member 253. The coupling member 253 may include a protrusion 253b in which a lower area of the coupling member 253 protrudes into the coupling hole 253a. In one or more embodiments, the coupling member 253 may be provided with a stepped portion within the coupling hole 253a. The deformable part 251d of the lower terminal 251 may be pressed to be in contact with a top surface of the protrusion 253b.

A welding groove 251c having a depth may be provided from approximately the center of the top surface of the coupling part 251b of the lower terminal 251 toward the head 251a. The lower terminal 251 may be provided with the welding groove 251c to reduce a lower thickness 251h of the lower terminal 251. The lower thickness 251h of the lower terminal 251 may be a thickness from a bottom surface of the welding groove 251c to a bottom surface of the head 251a. The lower thickness 251h of the lower terminal 251 may be reduced by the welding groove 251c, and thus welding of the lower terminal 251 and the first current collector plate 130 may be performed outside of the case 110. The welding groove 251c may have an inner diameter similar to that of the welding groove 151c at the upper side. The welding groove 251c may have an inner diameter at the upper side that is equal to or less than an inner diameter at the lower side.

The lower thickness 251h of the lower terminal 251 may be similar to the lower thickness 151h of the lower terminal 151.

An outer diameter of the coupling part 251b may be greater at an area outside the case 110 than at an area inside the terminal hole 111a of the case 110. In one or more embodiments, the outer diameter of the deformable part 251d may be greater than that of the coupling part 251b.

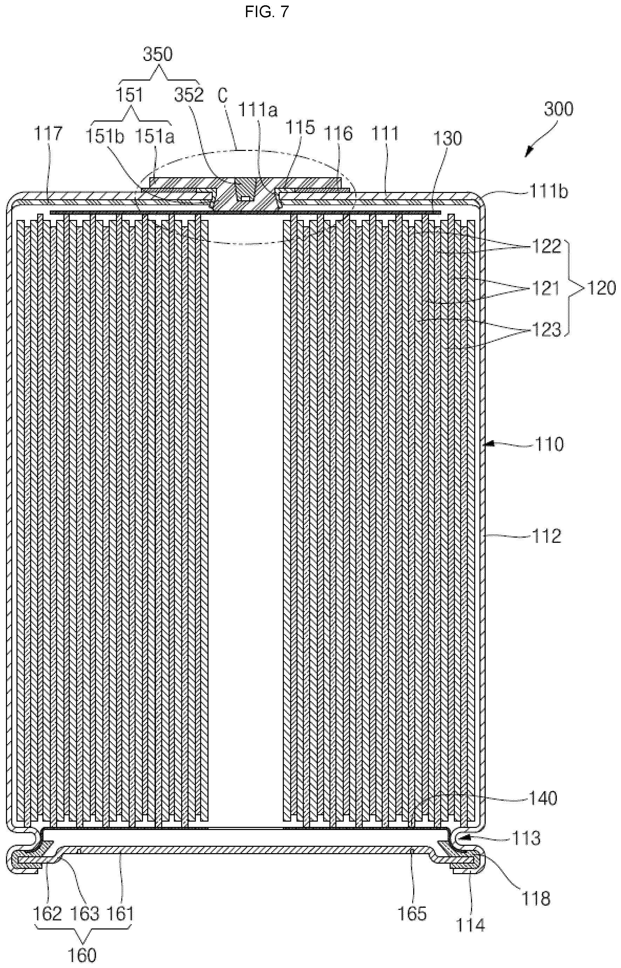

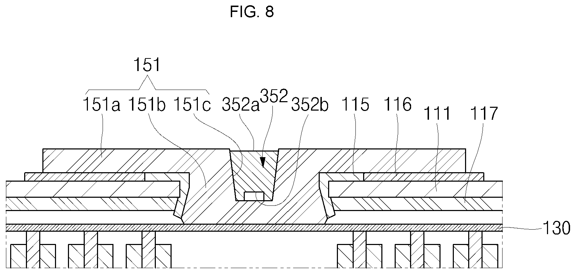

FIG. 7 illustrates a cross-sectional view of a cylindrical secondary battery according to embodiments of the present disclosure. FIG. 8 illustrates an enlarged cross-sectional view of a portion C of FIG. 7.

As illustrated in FIGS. 7 and 8, a secondary battery 200 according to embodiments may include a case 110, an electrode assembly 120 accommodated in the case 110, a terminal 350 coupled to a terminal hole provided in one end (e.g., the upper end) of the case 110, and a cap plate 160 that seals an opening of the other end (e.g., a lower end) of the case 110. In one or more embodiments, the cylindrical secondary battery 200 may include a first current collector plate 130, which electrically connects a first electrode plate 121 of the electrode assembly 120 to a terminal 350, and a second current collector plate 140, which connects the case 110 to a second electrode plate 122 of the electrode assembly 120.

The case 110, the electrode assembly 120, the first current collector plate 130, the second current collector plate 140, and the cap plate 160 of the cylindrical secondary battery 300 may be the same as those of the cylindrical secondary battery illustrated in FIGS. 1 to 3. In one or more embodiments, the terminal 350 of the cylindrical secondary battery 300 may have a lower terminal 151 that has the same structure as the terminal 150 of the cylindrical secondary battery 100 illustrated in FIGS. 1 to 3, but may have an upper terminal 352 that ais different from that of the cylindrical secondary battery 100.

As a result, descriptions of the cylindrical secondary battery 300 will focus on the structure of the upper terminal 352, which is different from those of the cylindrical secondary battery 100.

The upper terminal 352 may be inserted into a welding groove 151c provided in a head 151a of the lower terminal 151. The upper terminal 352 may be filled (or substantially filled) into the welding groove 151c of the lower terminal 151. The upper terminal 352 may be inserted into the welding groove 151c of the lower terminal 151 and then fixed to the lower terminal 151 by welding at the upper side. The upper terminal 352 may have a flat top surface 352a. An outer diameter of the upper terminal 352 may correspond to an inner diameter of the welding groove 151c. The top surface 352a of the upper terminal 352 may be below a head 151a of the lower terminal 151. A stepped portion may be provided between the top surface 352a of the upper terminal 352 and the top surface of the head 151 (e.g., the top surface 352a of the upper terminal 352 may be recessed below the top surface of the head 151). A height difference between the top surface 352a of the upper terminal 352 and the top surface of the head 151 may be about (approximately) 0.05 mm to about (approximately) 0.1 mm. The height difference between the top surface 352a of the upper terminal 352 and the top surface of the head 151 may be provided such that after the upper terminal 352 and the head 151 are coupled to each other by welding, the welding bead does not protrude above the head 151.

In one or more embodiments, a bottom surface of the upper terminal 352 may be spaced apart from a bottom surface of the welding groove 151c. In one or more embodiments, the upper terminal 352 may include an escape groove 352b extending upward at approximately a center of the bottom surface. The escape groove 352b of the upper terminal 352 may prevent contact between the upper terminal 352 and a welding bead generated in the welding groove 151c of the lower terminal 151. In one or more embodiments, the escape groove 352b may prevent the upper terminal 352 from protruding upward by the welding bead in the welding groove 151c. The top surface of the head 151a of the lower terminal 151 may be a top surface of the terminal 350. A diameter of the head 151 of the lower terminal 151 may be about (approximately) 11 mm or more, and may be less than a diameter of the top surface part 111 of the case 110. Each of the top surface of the head 151 of the lower terminal 151 and the top surface of the upper terminal 352 may be the top surface of the terminal 350.

In one or more embodiments, the lower terminal 151 may be replaced with the lower terminal 251 and the coupling member 253 illustrated in FIGS. 5 and 6.

The upper terminal 352 may be inserted into the welding groove 151c of the lower terminal 151 to prevent a sealing force from being deteriorated due to the damage that may occur during the welding between the lower terminal 151 and the first current collector plate 130 and to maintain flatness of the top surface of the terminal 150.

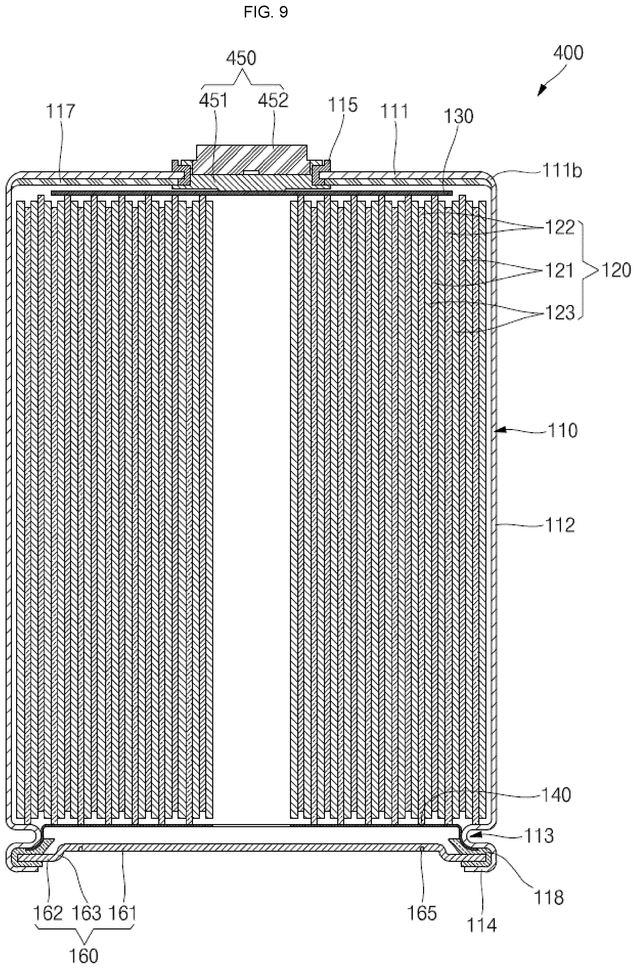

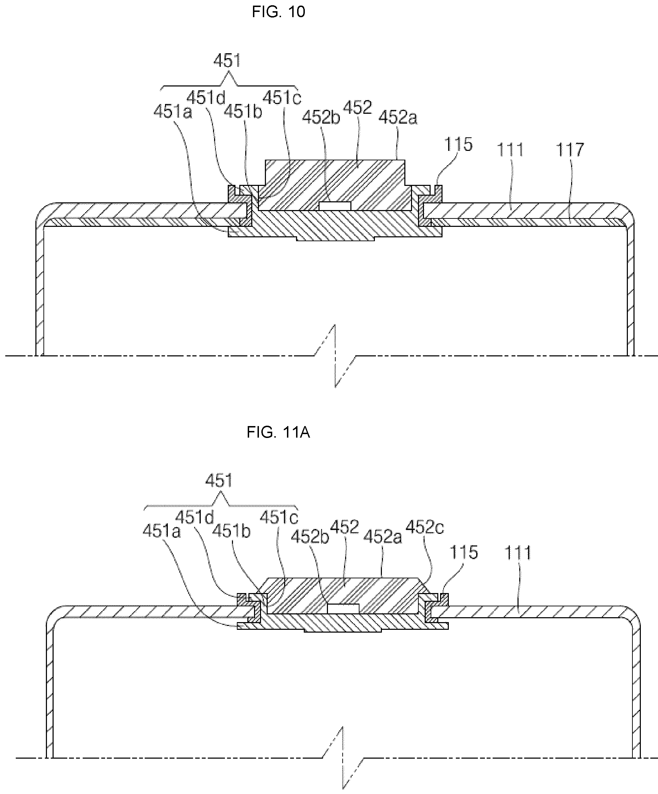

FIG. 9 illustrates a cross-sectional view of a cylindrical secondary battery according to embodiments. FIG. 10 is an enlarged cross-sectional view of a terminal portion of FIG. 9.

As illustrated in FIGS. 9 and 10, a secondary battery 400 may include a case 110, an electrode assembly 120 accommodated in the case 110, a terminal 450 coupled to a terminal hole provided in one end (e.g., the upper end) of the case 110, and a cap plate 160 that seals an opening of the other end (e.g., the lower end) of the case 110. In one or more embodiments, the cylindrical secondary battery 400 may include a first current collector plate 130, which electrically connects a first electrode plate 121 of an electrode assembly 120 to a terminal 450, and a second current collector plate 140, which connects the case 110 to a second electrode plate 122 of the electrode assembly 120.

The case 110, the electrode assembly 120, the first current collector plate 130, the second current collector plate 140, and the cap plate 160 of the cylindrical secondary battery 400 may be the same as those of the cylindrical secondary battery illustrated in FIGS. 1 to 3. In one or more embodiments, a terminal 250 of the cylindrical secondary battery 200 may be different from that of the cylindrical secondary battery 100.

As a result, descriptions of the cylindrical secondary battery 400 will focus on the structure of the terminal 450, which is different from that of the cylindrical secondary battery 100.

A lower terminal 451 may include a head 451a inside the case 110 and a coupling part 451b extending from a center (or substantially a center) of the head 451a toward the outside of the case 110. A planar size of the head 451a may be greater than that of the coupling part 451b. In the lower terminal 451, a lower end of the coupling part 451b may be connected to a top surface of the head 451a, and the head 451a and the coupling part 451b may be integral with each other or monolithic. The lower terminal 451 may be coupled to a terminal hole 111a of the case 110 in a direction outward from the inside of the case 110. In one or more embodiments, a first gasket 115 may be between the lower terminal 451 and the case 110. The coupling part 451b of the lower terminal 451 may be compressively deformed (compression molded) by riveting to seal a terminal hole 110a of the case 110. The compressively deformed (molded) portion of the lower terminal 451, which is an end of the coupling part 451b, may be referred to as a deformable part 451d. A gasket 115 may be between the deformable part 451d and the case 110.

A welding groove 451c having a depth may be provided from approximately the center of the top surface of the coupling part 451b of the lower terminal 451 extending downward toward the head 451a. The lower terminal 451 may be provided with the welding groove 451c to reduce a lower thickness 451h of the lower terminal 451. The lower thickness 451h of the lower terminal 451 may be a thickness from a bottom surface of the welding groove 451c to a bottom surface of the head 451a. The lower thickness 451h of the lower terminal 451 may be reduced by the welding groove 451c, and thus welding of the lower terminal 451 and the first current collector plate 130 may be performed outside the case 110. The welding groove 451c may have an inner diameter similar to that of the welding groove 151c at the upper side. The lower thickness 451h of the lower terminal 451 may be similar to the lower thickness 151h of the lower terminal 151.

The welding groove 451c of the lower terminal 451 may have an inner diameter of about (approximately) 11 mm to about (approximately) 18 mm at an upper side. The welding groove 451c may have an inner diameter at the upper side, which is equal to or greater than an inner diameter of the welding groove 451c at the lower side.

The upper terminal 452 may extend into the welding groove 451c provided in the lower terminal 451. The upper terminal 452 may be filled (or substantially filled) in the welding groove 451c of the lower terminal 451. The upper terminal 452 may be inserted into the welding groove 451c of the lower terminal 451 and then fixed to the lower terminal 451 by welding. The upper terminal 452 may have a flat top surface 452a.

An outer diameter of the upper terminal 452 may correspond to an inner diameter of the welding groove 451c. The top surface 452a of the upper terminal 452 may protrude above the deformable part 451d of the lower terminal 451. A lower area of the upper terminal 452 inserted into the welding groove 451c may have an outer diameter that is larger than an outer diameter of an upper area of the upper terminal 452 protruding outside of the welding groove 451c. The upper terminal 452 may have a stepped portion on a sidewall. A top surface of the lower area of the upper terminal 452 may have the same surface as a top surface of the deformable part 451d (e.g., the top surface of the lower area of the upper terminal 452 and the top surface of the deformable part 451d may be co-planar or substantially co-planar). The upper terminal 452 and the lower terminal 451 may be coupled to each other by the welding between the top surface of the lower area of the upper terminal 452 and the top surface of the deformable part 451d.

A stepped portion may be provided between the top surface 452a of the upper terminal 452 and the top surface of the deformable part 451d. A diameter of the top surface of the upper terminal 452 may be about (approximately) 11 mm or more, and the diameter may be less than that of a top surface part 111 of the case 110. The top surface of the upper terminal 452 may be the top surface of the terminal 450.

In one or more embodiments, a bottom surface of the upper terminal 452 may be spaced apart from a bottom surface of the welding groove 451c. In one or more embodiments, the upper terminal 452 may include an escape groove 452b extending upward at approximately a center of the bottom surface. The escape groove 452b of the upper terminal 452 may prevent contact between the upper terminal 452 and a welding bead generated in the welding groove 451c of the lower terminal 451. In one or more embodiments, the escape groove 452b may prevent the upper terminal 452 from protruding upward due to the welding bead in the welding groove 451c.

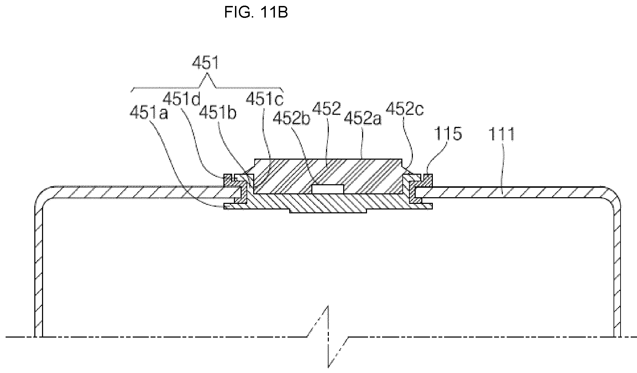

As illustrated in FIGS. 11A and 11B, the upper terminal 452 may further include a flange 452c that covers at least a portion of the top surface of the deformable part 451c of the lower terminal 451. In one or more embodiments, the upper terminal 452 may extend so that the flange 452c covers the deformable part 451c of the lower terminal 151. The flange 452c may extend obliquely from the top surface of the upper terminal 452, as illustrated in FIG. 11A. In one or more embodiments, the flange 452c may have inclined upper and bottom surfaces. In one or more embodiments, in the cross-section, the flange 452c may have an inclined surface in which an angle that is in contact with the top surface of the upper terminal 452 is an obtuse angle, and an angle that is in contact with the bottom surface of the flange 452 is an acute angle. The upper terminal 452 may be coupled to the lower terminal 451 by the welding at an upper side of the flange 452c.

In one or more embodiments, the flange 452c may extend to be inclined lower than the top surface of the upper terminal 452, as illustrated in FIG. 11B. In one or more embodiments, the flange 452c may be stepped in an edge area, as depicted in FIG. 3. In one or more embodiments, a thickness of the flange 452c may be about (approximately) 0.5 mm to about (approximately) 1.5 mm.

In the cylindrical secondary battery according to the various embodiments, the terminal and the current collector plate may be welded outside the case through the welding groove provided in the lower terminal to prevent any welding impurities from being generated inside the case and/or to prevent the electrode assembly from being damaged by the welding heat.

In the cylindrical secondary battery according to the various embodiments, because the current collector plate and the terminal are welded inside the welding groove of the terminal, the welding bead may be inside the terminal groove to prevent the terminal from protruding due to the welding bead.

In the cylindrical secondary battery according to the various embodiments, the welding groove provided in the lower terminal may be filled (or substantially filled) by the upper terminal so that the top surface of the terminal may have the approximately flat top surface, and thus, if a plurality of the secondary batteries are connected together through a busbar, the welding defects due to the misalignment, which may occur due to the welding groove, or the increase in resistance due to the insufficient welding area, may be prevented from occurring.

## Claims

1. A cylindrical secondary battery (100, 200, 300, 400) comprising:
an electrode assembly (120) comprising a first electrode plate (121), a separator (123), and a second electrode plate (122);
a case (110) accommodating the electrode assembly (120), the case (110) comprising a lower end that is open and electrically coupled to the second electrode plate (122);
a first current collector plate (130) between a top surface of the electrode assembly (120) and the case (110), the first current collector plate (130) being electrically connected to the first electrode plate (121);
a terminal (150, 250, 350, 450) passing through a terminal hole (111a) in a top surface (111) of the case (110), the terminal (150, 250, 350, 450) comprising a lower end electrically and mechanically coupled to a top surface of the first current collector plate (130); and
a cap plate (160) configured to seal the lower end of the case (110),
wherein the terminal (150, 250, 350, 450) comprises:
a lower terminal (151, 251, 451) comprising a welding groove (151c, 251c, 451c) having a depth from a top surface of the terminal (150, 250, 350, 450) in a downward direction; and
an upper terminal (152, 352, 452) extending into the welding groove (151c, 251c, 451c) of the lower terminal (151, 251, 451).

2. The cylindrical secondary battery (100, 300) as claimed in claim 1, wherein the lower terminal (151) comprises:
a head (151a) on an upper portion of the top surface (111) of the case (110); and
a coupling part (151b) extending from a central portion of the head (151a) toward an inside of the case (110), the coupling part (151b) and the head (151a) being integral.

3. The cylindrical secondary battery (100, 200, 300, 400) as claimed in claim 2, wherein a top surface of the first current collector plate (130) is coupled to a bottom surface of the lower terminal (151, 251, 451) by a welding bead in the welding groove (151c, 251c, 451c); and/or
wherein the welding groove (151c, 251c, 451c) extends through the central portion of the head (151a, 251a, 451a) and downward from an upper portion of the coupling part (151b, 251b, 451b).

4. The cylindrical secondary battery (100, 200, 300, 400) as claimed in claim 2 or 3, wherein a planar size of the head (151a, 251a, 451a) is greater than a planar size of the coupling part (151b, 251b, 451b); and/or
wherein a planar size of a lower portion of the coupling part (151b, 251b, 451b) is greater than an area of the terminal hole (111a) of the case (110).

5. The cylindrical secondary battery (200, 400) as claimed in claim 1,
wherein the lower terminal (251, 451) comprises: a head (251a, 451a) on a lower portion of a top surface (111) of the case (110); and a coupling part (251b, 451b) extending from a central portion of the head (251a, 451a) toward an outside of the case (110), the coupling part (251b, 451b) being integrated with the head (251a, 451a);
wherein the welding groove (251c, 451c) extends downward from a central portion of a top surface of the coupling part (251b, 451b); and
wherein the cylindrical secondary battery further comprises a coupling member (253) on a top surface (111) of the case (110) and coupled to the coupling part (251b).

6. The cylindrical secondary battery (200) as claimed in claim 5, wherein the coupling member (253) comprises a coupling hole (253a) passing through a center of the coupling member (253);
wherein the coupling part (251b) of the lower terminal (251) comprises a deformable part (251d), an upper side of the deformable part (251d) passing through the coupling hole (253a) and riveted to the coupling member (253);
wherein the coupling member (253) further comprises a protrusion (253b) protruding from a lower area of the coupling hole (253a), and wherein a stepped portion is in the coupling hole (253a); and
wherein preferably the deformable part (251d) of the lower terminal (251) is above the protrusion (253b) in the coupling part (251b).

7. The cylindrical secondary battery (100, 200, 400) as claimed in any one of claims 1 to 6, wherein the upper terminal (152, 452) comprises:
a main body (152a) extending into the welding groove (151c, 251c, 451c); and
a flange (152b, 452c) extending from an upper portion of the main body (152a) and covering a top surface of the lower terminal (151, 251, 451); and
wherein preferably a bottom surface of the main body (152a) is spaced apart from a bottom surface of the welding groove (151c, 251c).

8. The cylindrical secondary battery (100, 200, 400) as claimed in claim 7, wherein a thickness of an edge area (152c) of the flange (152b, 452c) is less than thicknesses of other areas of the flange (152b, 452c); and
wherein preferably the edge area (152c, 162) of the flange (152b, 452c) comprises a stepped portion or an inclined surface.

9. The cylindrical secondary battery (100, 200, 400) as claimed in claim 7, wherein the main body (152a) has an outer diameter less than an inner diameter of the welding groove (151c, 153, 251c); and/or
wherein the cylindrical secondary battery (100, 200, 400) further comprises an anisotropic conductive material between a bottom surface of the flange (152b, 452c) and a top surface (452a) of the lower terminal (251, 451).

10. The cylindrical secondary battery (400) as claimed in claim 1, wherein a top surface (452a) of the upper terminal (452) protrudes further upward than a top surface of the lower terminal (451).

11. The cylindrical secondary battery (400) as claimed in claim 10, wherein an outer diameter of a lower area of the upper terminal (452) in the welding groove (451c) is greater than a diameter of an upper area of the upper terminal (452) outside of the welding groove (451 c).

12. The cylindrical secondary battery (400) as claimed in claim 10, wherein the upper terminal (452) further comprises a flange (452c) extending along a top surface of the lower terminal (451); and
wherein preferably the flange (452c) comprises a stepped portion or an inclined surface.

13. The cylindrical secondary battery (300) as claimed in claim 1,
wherein a top surface (352a) of the upper terminal (352) is below a top surface of the lower terminal (151); and/or
wherein the upper terminal (352) comprises an escape groove (352b) extending upward from a bottom surface of the upper terminal (152); and/or
wherein the upper terminal (352) and the lower terminal (151) are welded to each other.

14. The cylindrical secondary battery (100, 200, 300, 400) as claimed in claim 1,
wherein the top surface (452a) of the upper terminal (452) has a diameter of approximately 11 mm or more, and wherein the diameter of the top surface of the terminal (450) is less than a diameter of a top surface part (111) of the case (110); and/or
wherein an upper inner diameter of the welding groove (151c, 251c) is greater than a lower inner diameter of the welding groove (151c, 251c); and/or
wherein the cylindrical secondary battery (400) further comprises a first gasket (115) between the terminal (450) and the case (110).

15. The cylindrical secondary battery (100) as claimed in claim 1, wherein the case (110) comprises:
a beading part (113) recessed into the case (110) above the cap plate (160); and
a crimping part (114) at a lower portion of the case (110), wherein a lower end of the crimping part (114) is bent inward and fixes the cap plate (160); and
wherein the cylindrical secondary battery (100) preferably further comprises a second gasket (118) between the cap plate (160) and the beading part (113) and between the cap plate (160) and the crimping part (114), wherein the cap plate (160) is non-polar.
